# EUROPÄISCHE PATENTSCHRIFT

(11) **EP 3 795 388 B1**
(45) Veröffentlichungstag und Bekanntmachung des Hinweises auf die Patenterteilung: **09.08.2023**
(21) Anmeldenummer: 20197275.9
(22) Anmeldetag: 21.09.2020
(51) Int. Cl.: B60D 1/64, H02M 3/156, H01R 31/06, H01R 13/66

(54) **ADAPTER MIT EINEM STECKER FÜR EINE 12 V- ODER 24 V-ANHÄNGERSTECKDOSE UND MIT EINER 24 V- ODER 12 V-ANHÄNGERSTECKDOSE**
ADAPTER WITH A PLUG FOR A 12 V OR 24 V TRAILER SOCKET AND WITH A 24 V OR 12 V TRAILER SOCKET
ADAPTATEUR DOTÉ D'UNE PRISE POUR UNE PRISE ENFICHABLE DE REMORQUE 12 V OU 24 V ET D'UNE PRISE ENFICHABLE DE REMORQUE 24 V OU 12 V

(30) Priorität: 20.09.2019 DE 202019105220 U
(43) Veröffentlichungstag der Anmeldung: 24.03.2021
(73) Patentinhaber: Rüttgerodt, Werner, 34355 Staufenberg (DE)
(72) Erfinder: Rüttgerodt, Werner, 34355 Staufenberg (DE)
(74) Vertreter: REHBERG HÜPPE + PARTNER

(56) Entgegenhaltungen:
- DE-A1- 10 324 888
- DE-U1- 29 613 311
- KR-A- 20140 135 535
- US-A- 5 729 058

## Beschreibung

### TECHNISCHES GEBIET DER ERFINDUNG

Die Erfindung bezieht sich auf einen Adapter zum elektrischen Anschließen eines Anhängers an ein Zugfahrzeug, wobei ein Stecker, der an einem Anschlusskabel des Anhängers vorgesehen ist, nicht zu einer an dem Zugfahrzeug vorgesehenen Anhängersteckdose passt. Der Adapter stellt die fehlende Kompatibilität des Steckers mit der Anhängersteckdose her.

Genauer bezieht sich die Erfindung auf einen Adapter mit einem Adaptergehäuse, mit einem ersten Stecker, der ortsfest an dem Adaptergehäuse angeordnet ist und der zum Einstecken in eine erste Anhängersteckdose ausgebildet ist, mit einer zweiten Anhängersteckdose, die ortsfest an dem Adaptergehäuse angeordnet ist und die zum Einstecken eines zweiten Steckers ausgebildet ist, und mit einem Spannungswandler, der in dem Adaptergehäuse angeordnet ist und der zwischen den ersten Stecker und die zweite Anhängersteckdose geschaltet ist. Der Stecker des Adapters ist dabei zum Einstecken in eine als 12 V- oder als 24 V-Anhängersteckdose ausgebildete erste Anhängesteckdose ausgebildet, während die zweite Anhängersteckdose entsprechend als 24 V- oder als 12 V-Anhängersteckdose ausgebildet ist. Der Spannungswandler weist mehrere Kanäle jeweils zwischen einem Pol des Steckers und einem Pol der zweiten Anhängersteckdose und mit je einem Schalter auf.

Bei Verwendung eines solchen Adapters, d. h. dann, wenn der Adapter mit seinem ersten Stecker in die erste Anhängersteckdose eingesteckt ist und der zweite Stecker in die zweite Anhängersteckdose des Adapters eingesteckt ist, befindet sich der zweite Stecker, d. h. der Stecker an der Anschlussleitung des jeweiligen Anhängers in einer festen Relativposition gegenüber der ersten Anhängersteckdose, d. h. der Anhängersteckdose des Zugfahrzeugs. Diese Relativposition ist dabei nicht grundsätzlich weniger fest als diejenige eines passenden Steckers an der Anschlussleitung des Anhängers direkt in der Anhängersteckdose des Zugfahrzeugs.

### STAND DER TECHNIK

Aus der DE 296 13 311 U1 ist ein Adapter für die elektrische Verbindung zwischen Zugfahrzeug und Anhänger bekannt, der die Merkmale des Oberbegriffs des unabhängigen Patentanspruchs 1 aufweist, wie sie oben angegeben wurden, wobei der Stecker des Adapters zum Einstecken in eine 24 V-Anhängersteckdose und die zweite Anhängesteckdose als 12 V-Anhängersteckdose ausgebildet ist. Der in dem Adaptergehäuse vorgesehene Spannungswandler weist zur Spannungsreduktion von 24 V auf 12 V je Lastkreis einen MOSFET-Transistor als Leistungsschalter auf, der zur Pulsweitenmodulation des fließenden Stroms getaktet wird. Der Takt wird für alle Lastkreise zentral erzeugt. Eine Taktüberwachung blockiert die Ansteuerung der Transistoren, falls die Takterzeugung ausfällt. Dadurch werden angeschlossene Lampen vor einer Dauerspannung von 24 V geschützt. Angepasst an die Standards bei Kraftfahrzeugelektriken mit 12 V beziehungsweise 24 V Spannung weist der bekannte Adapter einen sieben- oder fünfzehnpoligen Stecker und eine sieben- oder dreizehnpolige Anhängersteckdose auf. Der bekannte Adapter erlaubt das Anschließen eines Anhängers mit einer Glühbirnen aufweisenden 12 V-Elektrik an ein Zugfahrzeug mit einer 24 V-Elektrik und einer entsprechenden 24 V-Anhängersteckdose. Für eine 12 V-Elektrik mit anderen Verbrauchern als Glühbirnen erweist sich der bekannte Adapter jedoch als ungeeignet, da er keine konstante Gleichspannung von 12 V, sondern eine gepulste Gleichspannung bereitstellt, die nur im Mittel 12 V beträgt und je nach der angeschlossenen 12 V-Elektrik nicht nur zwischen 0 V und 24 V schwanken, sondern auch darüber hinaus gehende Spannungsspitzen und Wechselspannungsanteile, d. h. Umkehrungen der Polarität der Ausgangsspannung aufweisen kann. Zudem ist die über dem Spannungswandler des bekannten Adapters abfallende Verlustleistung relativ hoch, so dass die Gefahr einer Überhitzung seines Spannungswandlers besteht.

Zum Anschließen von Anhängern mit 24 V-Elektrik, wie sie typischerweise bei LKW-Anhängern üblich ist, an Zugfahrzeuge mit 12 V-Elektrik, wie sie nicht nur bei PKW sondern auch bei Traktoren typischerweise vorhanden ist, sind sogenannte Spannungsverdoppler von 12 V auf 24 V bekannt. Solche Spannungsverdoppler weisen ein im Zugfahrzeug zu montierendes und auch als Kühlkörper dienendes Gehäuse auf, in dem ein Spannungswandler mit acht Kanälen angeordnet ist. Je Kanal setzt der Spannungswandler eine Eingangsspannung von 12 V auf eine Ausgangsspannung von 24 V hoch. Über ein eingangsseitiges Anschlusskabel ist der Spannungswandler an die 12 V-Elektrik des jeweiligen Zugfahrzeugs anzuschließen. Über ein ausgangsseitiges Anschlusskabel kann dann eine 24 V-Anhängersteckdose angeschlossen werden. Diese 24 V Anhängersteckdose wird dann regelmäßig zusätzlich zu einer 12 V-Anhängersteckdose in der Nähe einer mechanischen Anhängerkupplung am Heck des Zugfahrzeugs montiert. Der bekannte Spannungsverdoppler kann daher nicht einfach bei Bedarf schnell zum Einsatz kommen, sondern erfordert eine aufwändige Montage.

Aus der KR 2014 0135535 A ist ein Adapter mit einem DC/DC-Wandler bekannt, um die über eine Steckdose in einem Kraftfahrzeug verfügbare Versorgungsgleichspannung von 12 bis 24 V in eine andere Gleichspannung umzuwandeln, wie sie für den Betrieb eines elektronischen Geräts benötigt wird.

Aus der DE 103 24 888 A1 ist ein Steckadapter-Spannungswandler zum Anschluss der Beleuchtung eines 12 V-Anhängers an ein 24 V-Zugfahrzeug bekannt, der mehrere in einen Stecker-Adapter eingebaute Impuls-Effektiv-Leistungswandler niedriger, jedoch unterschiedlicher Frequenzen ohne Eigenstromverbrauch gegen Masse bei offener Last aufweist. Jeder dieser Zweige hat einen Überlast- und Übertemperaturschutz. Durch die Trennung der Zweige wird ein Schutz vor Totalausfall der Beleuchtung erreicht. Durch den Versatz der Frequenzen um etwa 50 Hz ergibt sich eine geringere Impulsbelastung des Bordnetzes als bei Wandlern mit nur einem Taktgenerator.

### AUFGABE DER ERFINDUNG

Der Erfindung liegt die Aufgabe zugrunde, einen einfachen Anschluss von Anhängern mit beliebiger 24 V- oder 12 V-Elektrik an Zugfahrzeuge mit 12 V- oder 24 V-Elektrik zu ermöglichen.

### LÖSUNG

Die Aufgabe der Erfindung wird durch einen Adapter mit den Merkmalen des unabhängigen Patentanspruchs 1 gelöst. Die abhängigen Patentansprüche betreffen bevorzugte Ausführungsformen des erfindungsgemäßen Adapters.

### BESCHREIBUNG DER ERFINDUNG

Bei einem erfindungsgemäßen Adapter mit einem Adaptergehäuse, mit einem ersten Stecker, der ortsfest an dem Adaptergehäuse angeordnet ist und der zum Einstecken in eine erste Anhängersteckdose ausgebildet ist, mit einer zweiten Anhängersteckdose, die ortsfest an dem Adaptergehäuse angeordnet ist und die zum Einstecken eines zweiten Steckers ausgebildet ist, und mit einem Spannungswandler, der in dem Adaptergehäuse angeordnet ist und der zwischen den ersten Stecker und die zweite Anhängersteckdose geschaltet ist, wobei der erste Stecker ein 12 V-Stecker und die zweite Anhängersteckdose eine 24 V-Anhängersteckdose ist oder der erste Stecker ein 24 V-Stecker und die zweite Anhängersteckdose eine 12 V-Anhängersteckdose ist, weißt der Spannungswandler mehrere Kanäle mit je einem DC/DC-Wandler auf. Der jeweilige DC/DC-Wandler umfasst einen Schalter und ist ein Hochsetzsteller, wenn der erste Stecker ein 12 V-Stecker und die zweite Anhängersteckdose eine 24 V-Anhängersteckdose ist, und ein Tiefsetzsteller, wenn der erste Stecker ein 24 V-Stecker und die zweite Anhängersteckdose eine 12 V-Anhängersteckdose ist.

Die Erfindung integriert erstmalig einen echten DC/DC-Wandler in jeden einzelnen Kanal oder Lastkreis eines Spannungswandlers eines Adapters zwischen Anhängersteckdose und Anhänger. Der aus der DE 20 2012 012 852 U1 bekannte Adapter weist demgegenüber je Lastkreis ausschließlich einen getakteten Transistor auf, der praktisch keine andere Funktion als die Reduktion des im Mittel fließenden Stroms hat. Überraschenderweise erweist es sich dabei als überhaupt praktikabel, den Spannungswandler mit den DC/DC-Wandlern in das Adaptergehäuse einzubauen und dort dauerhaft zu betreiben. Konkret kann bei einem DC/DC-Wandler problemlos ein Wirkungsgrad von mindestens 95 % erreicht werden, so dass die Verlustleistung über den jeweiligen Kanal des Spannungswandlers auf maximal 5 % der Eingangsleistung begrenzt ist. Ein als Kühlkörper dienendes Gehäuse, wie es von dem sogenannten Spannungsverdoppler bekannt ist, erweist sich als nicht erforderlich.

Mit dem erfindungsgemäßen Adapter kann also erstmals ohne großen Aufwand eine vorhandene 12 V-Anhängersteckdose an einem Zugfahrzeug zur elektrischen Versorgung eines Anhängers mit einer nahezu beliebigen 24V-Elektrik oder eine vorhandene 24 V-Anhängersteckdose an einem Zugfahrzeug zur elektrischen Versorgung eines Anhängers mit einer nahezu beliebigen 12 V-Elektrik verwendet werden. Die Elektrik des jeweiligen Anhängers kann beispielsweise auch LEDs und elektrische Einrichtungen umfassen, die eine konstante Gleichspannung benötigen und empfindlich gegenüber Überspannungen und anderen Spannungsschwankungen sind. Dazu reicht es aus, den erfindungsgemäßen Adapter zwischen den Stecker an der Anschlussleitung des Anhängers und die Anhängersteckdose des Zugfahrzeugs einzustecken. Grundsätzlich kann der erfindungsgemäße Adapter dabei auch noch mit einem weiteren Adapter kombiniert werden, um verschiedene Stecker des Anhängers und/oder verschiedene Anhängersteckdosen des Zugfahrzeugs auszugleichen.

Jeder DC/DC-Wandler des Spannungswandlers des erfindungsgemäßen Adapters kann insbesondere den jeweiligen Schalter, eine Drossel, einen Kondensator und eine Diode umfassen. Diese Komponenten können in einer für einen Hochsetzsteller oder Tiefsetzsteller üblichen Topologie verschaltet sein. Eine typische Induktion der Drossle jedes der DC/DC-Wandler liegt zwischen 5 und 10 µH, vorzugsweise bei etwa 8 µH.

Die Komponenten jedes der DC/DC-Wandler sind auf einer separaten Platine angeordnet sind. Entsprechend weißt der Spannungswandler des erfindungsgemäßen Adapters mindestens eine separate Platine je Kanal auf, der zwischen einem Pol des Steckers und einem Pol der zweiten Anhängersteckdose verläuft und einen DC/DC-Wandler umfasst. Da die Anzahl dieser Kanäle je nach Anzahl der Pole und Verwendung des erfindungsgemäßen Adapters unterschiedlich groß sein kann, kann der erfindungsgemäße Adapter unter Verwendung einer entsprechenden Anzahl von zuvor bestückten einfach passend konfektioniert werden.

Dabei können die Platinen der DC/DC-Wandler in der gewünschten Anzahl auf einer Hauptplatine des Spannungswandlers angeordnet werden, die eine ausreichende Anzahl von Montageplätzen für eine maximal sinnvolle Anzahl von Platinen aufweist. Vorzugsweise werden die Platinen orthogonal zu der Hauptplatine ausgerichtet. Zugleich können sich die Platinen quer zu einer von dem ersten Stecker zu der zweiten Anhängersteckdose verlaufenden Hauptachse des erfindungsgemäßen Adapters erstrecken.

Konkret kann der erste Stecker des erfindungsgemäßen Adapters ein sieben- oder dreizehnpoliger 12 V-Stecker oder ein sieben- oder fünfzehnpoliger 24 V-Stecker sein. Dabei kann der Spannungswandler des erfindungsgemäßen Adapters auch im Falle des dreizehnpoligen 12 V-Steckers oder des fünfzehnpoligen 24 V-Steckers nur sechs Kanäle mit je einem Hochsetzsteller bzw. Tiefsetzsteller aufweisen. Sechs Kanäle reichen aus, um die Mindestversorgung und Ansteuerung einer Elektrik eines Anhängers sicher zu stellen. Dabei geht es insbesondere um die sichere Ansteuerung der Beleuchtung des Anhängers.

Der erste Stecker des erfindungsgemäßen Adapters kann aber auch ein dreizehnpoliger 12 V-Stecker oder ein fünfzehnpoliger 24 V-Stecker sein, und der Spannungswandler acht getrennte Kanäle mit jeweils einem Hochsetzsteller aufweisen. Um diese zu nutzen, muss die zweite Anhängersteckdose aber eine fünfzehnpolige 24 V-Anhängersteckdose oder eine dreizehnpolige 12 V-Anhängersteckdose sein. Bei einer siebenpoligen 24 V- oder 12 V-Anhängersteckdose als zweiter Anhängersteckdose reicht aber in jedem Fall ein Spannungswandler mit sechs Kanälen aus. Grundsätzlich kann der erfindungsgemäße Adapter auch an andere Normen mit anderen als den genannten Polzahlen seines ersten Steckers und seiner zweiten Anhängersteckdose angepasst sein.

Mindestens einer oder jeder der Hochsetzsteller des erfindungsgemäßen Adapters kann ein einfacher spannungsverdoppelnder Step-Up-Wandler oder eine einfacher spannungshalbierender Step-Down-Wandler sein, d. h. ein Step-Up-Wandler der bezügliche seines Aufbaus und einer festen Taktung seines Schalters für eine ungeregelte Verdopplung einer eingangsseitigen Spannung von 12 V auf eine ausgangsseitige Spannung von 24 V ausgelegt ist, oder ein Step-Down-Wandler der bezügliche seines Aufbaus und einer festen Taktung seines Schalters für eine ungeregelte Halbierung einer eingangsseitigen Spannung von 24 V auf eine ausgangsseitige Spannung von 12 V ausgelegt ist. Auf eine Regelung der Ausgangsspannung kann also verzichtet werden. Auch eine aufwändige Spannungssteuerung ist nicht erforderlich. Es reicht vielmehr aus, wenn der jeweilige Step-Up-Wandler auf das Anlegen einer Eingangsspannung von ungefähr 12 V damit reagiert, seinen Schalter derart anzusteuern, dass die Eingangsspannung in eine etwa doppelt so große Ausgangsspannung von ungefähr 24 V hochgesetzt wird, und wenn der jeweilige Step-Down-Wandler auf das Anlegen einer Eingangsspannung von ungefähr 24 V damit reagiert, seinen Schalter derart anzusteuern, dass die Eingangsspannung in eine etwa halb so große Ausgangsspannung von ungefähr 12 V tiefgesetzt wird. Die für das Ansteuern des Schalters des jeweiligen Step-Up- oder Step-Down-Wandlers benötigte Versorgungsspannung kann dabei unmittelbar auf der Eingangsspannung des Step-Up- oder Step-Down-Wandlers basieren.

Die mit den Step-Up-Wandlern oder Step-Down-Wandlern verbundene Verlustleistung des Spannungswandlers des erfindungsgemäßen Adapters tritt nur auf, wenn tatsächlich eine Eingangsspannung an dem jeweiligen Step-Up- oder Step-Down-Wandler anliegt, dieser also auch tatsächlich benötigt wird und die an ihm anliegende Eingangsspannung hoch- oder tiefsetzt. Zugleich kann die Verlustleistung der DC/DC-Wandler selbst bei Ausbildung als wenig komplexe Step-Up- oder Step-Down-Wandler so klein bleiben, dass ein dauerhafter Betrieb des Spannungswandlers in dem Adaptergehäuse des erfindungsgemäßen Adapters unproblematisch ist.

Dies gilt auch dann, wenn das Adaptergehäuse aus mehreren starr miteinander verbundenen und gegeneinander abgedichteten Kunststoffteilen aufgebaut ist. Diese gegeneinander abgedichteten und typischerweise miteinander verschraubten und/oder verrasteten oder auch verschweißten oder verklebten Kunststoffteile können dabei Teile des ersten Steckers und der zweiten Anhängersteckdose des Adapters umfassen. Durch die gegeneinander abgedichteten Kunststoffteile ist der im Inneren des Adaptergehäuses angeordnete Spannungswandler zumindest vor Spritzwasser geschützt. Mit anderen Worten ist der Spannungswandler vorzugsweise in einer abgedichteten Kammer im Inneren des Adaptergehäuses angeordnet. Die mehrteilige Ausbildung des Adaptergehäuses erlaubt die kostengünstige Montage des erfindungsgemäßen Adapters unter Anordnung seines Spannungswandlers im Inneren des Adaptergehäuses.

Um die ortsfeste Anordnung des erfindungsgemäßen Adapters zwischen einer Anhängersteckdose eines Zugfahrzeugs und einem Stecker in einer Anschlussleitung eines Anhängers sicherzustellen, sind an dem ersten Stecker und/oder dem Adaptergehäuse des erfindungsgemäßen Adapters typischerweise erste Sicherungsmittel zum mechanischen Festlegen des ersten Steckers in der ersten Anhängersteckdose und/oder an der zweiten Anhängersteckdose und/oder dem Adaptergehäuse zweite Sicherungsmittel zum mechanischen Festlegen des zweiten Steckers in der 24 V-Anhängersteckdose ausgebildet. Bei diesen ersten und zweiten Sicherungsmitteln kann es sich um die typischen Sicherungsmittel handeln, die an einem entsprechenden Stecker beziehungsweise einer entsprechenden Anhängersteckdose regelmäßig vorgesehen sind, wie beispielsweise Drehelemente, Abstützflächen und Klappen.

Der erfindungsgemäße Adapter kann relativ kompakt aufgebaut sein. Eine Gesamtlänge des Adapters von einem ersten freien Ende des ersten Steckers bis zu einem zweiten freien Ende der zweiten Anhängersteckdose beträgt in aller Regel nicht mehr als 25 cm, oftmals nicht mehr als 20 cm, vorzugsweise nicht mehr als 15 cm und manchmal günstiger Weise sogar nicht mehr als 10 cm. Eine minimale Gesamtlänge des erfindungsgemäßen Adapters ist durch die Längen seines ersten Steckers und seiner zweiten Anhängersteckdose sowie einen dazwischen benötigten Raum im Inneren des Adaptergehäuses für die Aufnahme des Spannungswandlers definiert.

Eine Gesamtmasse des erfindungsgemäßen Adapters beträgt in aller Regel nicht mehr als 350 g, oftmals nicht mehr als 300 g, vorzugsweise nicht mehr als 250 g und manchmal günstiger Weise sogar nicht mehr als 200 g.

Ein Maximaldurchmesser des erfindungsgemäßen Adapters quer zu seiner von dem ersten Stecker zu der zweiten Anhängersteckdose verlaufenden Hauptachse beträgt typischerweise nicht mehr als 12 cm, vorzugsweise nicht mehr als 10 cm und manchmal günstiger Weise sogar nicht mehr als 8 cm.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des eingetragenen Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die das jeweilige Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisch eine Ausführungsform des erfindungsgemäßen Adapters mit einem 12V-Stecker und einer 24 V-Anhängesteckdose in einer Seitenansicht unter Wiedergabe verdeckter Linien.
- **Fig. 2**: ist ein Prinzipschaltplan eines Kanals eines Spannungswandlers des erfindungs-gemäßen Adapters gemäß Fig. 1, wobei der Kanal einen Hochsetzsteller aufweist.
- **Fig. 3**: zeigt Teile einer weiteren Ausführungsform des erfindungsgemäßen Adapters mit einem 24 V-Stecker und einer 12 V-Anhängersteckdose in einer perspektivischen Ansicht.
- **Fig. 4**: zeigt in separater Darstellung den Spannungswandler des erfindungsgemäßen Adapters gemäß Fig. 3; und
- **Fig. 5**: ist ein Prinzipschaltplan eines Kanals des Spannungswandlers gemäß Fig. 4, wobei der Kanal einen Tiefsatzsteller aufweist.

### FIGURENBESCHREIBUNG

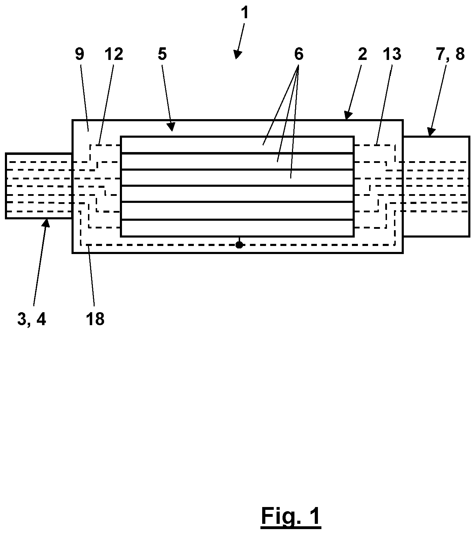

Der in **Fig. 1** schematisch dargestellte Adapter 1 weist ein Adaptergehäuse 2 auf. An dem Adaptergehäuse 2 ist ein Stecker 3 ortsfest angeordnet. Der Stecker 3 ist hier ein 12 V-Stecker 4, der zum Einstecken in eine hier nicht dargestellte 12 V-Anhängersteckdose ausgebildet ist.

Darüber hinaus ist der 12 V-Stecker 4 auch zum mechanischen Festlegen an dieser Anhängersteckdose ausgebildet. Der Stecker 3 weist mindestens sieben Pole auf, darunter einen Massepol 18. Für die verbleibenden mindestens sechs Pole 12 weist ein in dem Adaptergehäuse 2 angeordneter Spannungswandler 5 jeweils einen von sechs Kanälen 6 auf. Jeder der Kanäle 6 umfasst einen Hochsetzsteller. Ausgangsseitig sind der Massepol 18 und die Kanäle 6 an eine Anhängersteckdose 7 angeschlossen, die ebenfalls ortsfest an dem Adaptergehäuse 2 angeordnet ist und bei der es sich um eine 24 V-Anhängersteckdose 8 handelt. Auch die Anhängersteckdose 7 weist mindestens sieben Pole auf, von denen sechs Pole 13 an die Kanäle 6 angeschlossen sind. Die Anhängersteckdose 7 ist zum Einstecken eines hier nicht dargestellten 24 V-Steckers und zum mechanischen Festlegen dieses 24 V-Steckers in der Anhängersteckdose 7 ausgebildet.

Das Adaptergehäuse 2 besteht aus mehreren, hier nicht getrennt wiedergegebenen Kunststoffteilen, zu denen auch Teile des Steckers 3 und der Anhängersteckdose 7 zählen. Die Kunststoffteile sind typischerweise miteinander verschraubt und gegeneinander abgedichtet. So befindet sich der Spannungswandler 5 in einer abgedichteten Kammer 9 im Inneren des Adaptergehäuses 2 und ist dort zumindest vor Spritzwasser geschützt.

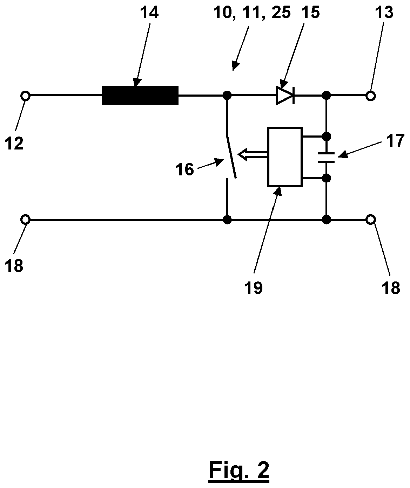

**Fig. 2** zeigt die Basisschaltung eines Step-Up-Wandlers 10 als Beispiel für einen Hochsetzsteller 11 als DC/DC-Wandler 25 in einem der Kanäle 6. Zwischen den eingangsseitigen Pol 12 des Steckers 3 und den zugehörigen ausgangsseitigen Pol 13 der Anhängersteckdose 7 ist eine Drossel 14 mit einer Diode 15 in Reihe geschaltet. Zwischen der Drossel 14 und der Diode 15 zweigt eine Leitung mit einem Schalter 16 und hinter der Diode 15 eine weitere Leitung mit einem Kondensator 17 zu dem Massepol 18 ab. Durch aufeinanderfolgendes Schließen und Öffnen des Schalters 16 wird die Induktivität der Drossel 14 aufgeladen und mit der Spannung an den Pol 12 des Steckers in Reihe geschaltet. Dadurch wird der Kondensator 17 auf eine höhere Spannung gegenüber dem Massepol 18 aufgeladen, als sie an dem eingangsseitigen Pol 12 anliegt. Diese erhöhte Spannung liegt an dem ausgangsseitigen Pol 13 gegenüber dem Massepol 18 an. Angesteuert wird der Steuerschalter 16 von einer Ansteuereinrichtung 19, die aus der über dem Kondensator 17 anliegenden Spannung versorgt wird und den Schalter 16 in einem festen vorgegebenen Takt schließt und öffnet. Der Takt ist dabei auf die Komponenten des Step-Up-Wandlers 10 so abgestimmt, dass eine Eingangsspannung zwischen den Polen 12 und 18 von 12 V auf eine Ausgangsspannung zwischen den Polen 13 und 18 und 24 V hochgesetzt wird. Die Ansteuereinrichtung 19 beginnt mit der Ansteuerung des Schalters 16 und setzt diese fort sobald und solange eine Spannung über dem Kondensator 17 anliegt. Dies ist mit jedem Anlegen einer Spannung zwischen den Polen 12 und 18 der Fall, solange der Schalter 16 ohne Ansteuerung offen, d. h. nicht leitend ist. Durch das Ansteuern des Schalters 16 wird diese Spannung dann so hochgesetzt, dass sie für die Versorgung einer 24 V-Elektrik ausreichend ist.

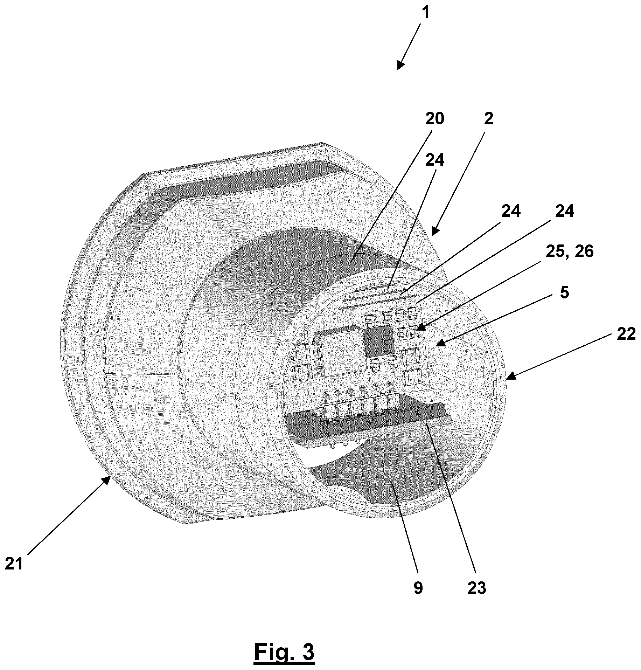

Von einer weiteren Ausführungsform des erfindungsgemäßen Adapters 1 mit einem hier nicht wiedergegebenen 24 V-Stecker und einer hier ebenfalls nicht wiedergegebenen 12 V-Anhängersteckdose sind in **Fig. 3** nur ein Gehäusemittelteil 20 des Adaptergehäuses 2 und der darin angeordnete Spannungswandler 5 dargestellt. Das Gehäusemittelteil 20 weist ein steckerseitiges Ende 21 und ein dosenseitiges Ende 22 auf. Längs einer dazwischen verlaufenden Hauptachse des Adapters 1 erstreckt sich eine Hauptplatine 23 des Spannungswandlers 5, auf der mehrere weitere Platinen 24 in jeweils einem Montageplatz montiert sind. Die Platinen 24 erstrecken sich orthogonal zu der Hauptplatine 23 und damit quer zu der Hauptachse des Adapters 1. Die Platinen 24 tragen jeweils die Komponenten eines DC/DC-Wandlers 25 in einem der Kanäle des Spannungswandlers 5. Bei diesen DC/DC-Wandlern 25 handelt es sich hier um Tiefsetzsteller 26.

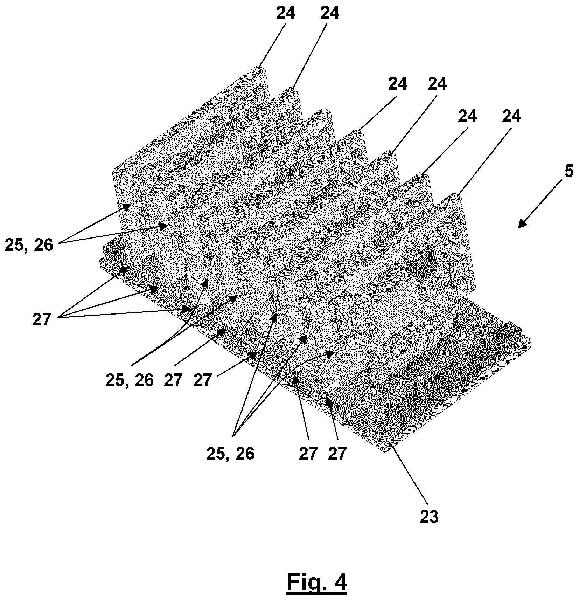

**Fig. 4** zeigt den Spannungswandler 5 gemäß Fig. 3 ohne das Gehäusemittelteil 20. Bestückt ist die Hauptplatine 23 hier mit insgesamt sieben Platinen 24, die jeweils die Komponenten eines DC/DC-Wandlers in Form eines Tiefsetzstellers 26 tragen. Dabei müssen die zugehörigen Montageplätze 27 für die Platinen 24 nicht vollständig besetzt sein. Vielmehr kann die Hauptplatine 23 je nach Bedarf bestückt werden, um den Spannungswandler 5 alternativ zwischen einen 7-poligen oder einen 15-poligen 24 V-Stecker einerseits und eine 13-polige oder eine 7-polige 12 V-Steckdose andererseits zu schalten

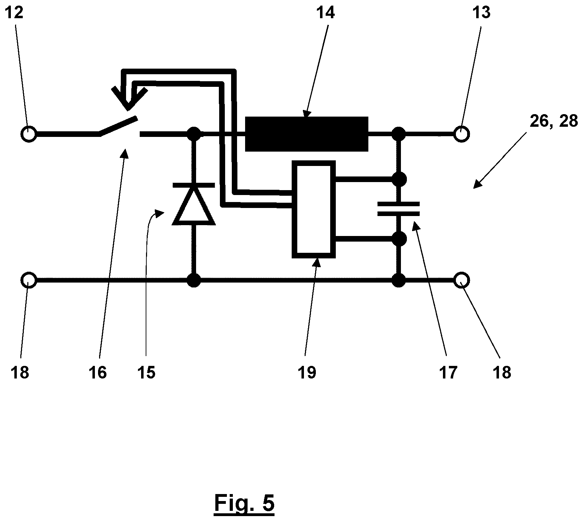

Der Prinzipschaltplan gemäß **Fig. 5** zeigt die Komponenten eines der Tiefsetzsteller 26 in typischer Verschaltung der Drossel 14, der Diode 15, des Schalters 16 und des Kondensators 17, wobei die Ansteuereinrichtung 19 den Schalter 16 abhängig von der über dem ausgangsseitigen Kondensator 17 anliegenden Spannung ansteuert. Bei geschlossenem Schalter 16 baut sich die Ausgangsspannung über den Kondensator 17 abhängig von der Eingangsspannung zwischen dem Pol 12 und dem Massepol 18 auf, wobei Strom durch den Schalter 16 und die Drossel 14 fließt. Wenn der Schalter 16 geöffnet wird, fließt der Strom aufgrund der Induktion der Drossel 14 zwar weiter, jetzt aber durch die Diode 15. Bei geeigneter Abstimmung der Induktivität der Drossel 14, der Kapazität des Kondensators 17 und der Frequenz, mit der der Schalter 16 angesteuert wird, wird so über dem Kondensator 17 eine im Wesentlichen konstante Gleichspannung bereitgestellt, die gegenüber der Eingangsspannung reduziert ist. Vorzugsweise ist der Tiefsetzsteller 26 als Step-Down-Wandler 28 ausgebildet, der die Eingangsspannung von 24 V auf 12 V halbiert.

### BEZUGSZEICHENLISTE

- 1: Adapter
- 2: Adaptergehäuse
- 3: Stecker
- 4: 12 V-Stecker
- 5: Spannungswandler
- 6: Kanal
- 7: Anhängersteckdose
- 8: 24 V-Anhängersteckdose
- 9: Kammer
- 10: Step-Up-Wandler
- 11: Hochsetzsteller
- 12: Pol des Steckers 3
- 13: Pol der Anhängersteckdose 7
- 14: Drossel
- 15: Diode
- 16: Schalter
- 17: Kondensator
- 18: Massepol
- 19: Ansteuereinrichtung
- 20: Gehäusemittelteil
- 21: steckerseitiges Ende
- 22: dosenseitiges Ende
- 23: Hauptplatine
- 24: Platinen
- 25: DC/DC-Wandler
- 26: Tiefsetzsteller
- 27: Steckplatz
- 28: Step-Down-Wandler

## Patentansprüche

1. Adapter (1) mit
- einem Adaptergehäuse (2),
- einem ersten Stecker (3), der ortsfest an dem Adaptergehäuse (2) angeordnet ist und der zum Einstecken in eine erste Anhängersteckdose ausgebildet ist,
- einer zweiten Anhängersteckdose (7), die ortsfest an dem Adaptergehäuse (2) angeordnet ist und die zum Einstecken eines zweiten Steckers ausgebildet ist, und
- einem Spannungswandler (5), der in dem Adaptergehäuse (2) angeordnet ist und der zwischen den ersten Stecker (3) und die zweite Anhängersteckdose (7) geschaltet ist,
- wobei der erste Stecker (3) ein 12 V-Stecker (4) ist und die zweite Anhängersteckdose (7) eine 24 V-Anhängersteckdose (8) ist oder der erste Stecker (3) ein 24 V-Stecker ist und die zweite Anhängersteckdose (7) eine 12 V-Anhängersteckdose ist und
- wobei der Spannungswandler (5) mehrere Kanäle (6) mit je einem Schalter (16) aufweist, **dadurch gekennzeichnet,**
- **dass** der Spannungswandler (5) mehrere Kanäle (6) mit je einem den jeweiligen Schalter umfassenden DC/DC-Wandler aufweist, wobei der DC/DC-Wandler (25) dann, wenn der erste Stecker (3) ein 12 V-Stecker (4) ist und die zweite Anhängersteckdose (7) eine 24 V-Anhängersteckdose (8) ist, ein Hochsetzsteller (11) ist und dann, wenn der erste Stecker (3) ein 24 V-Stecker ist und die zweite Anhängersteckdose (7) eine 12 V-Anhängersteckdose ist, ein Tiefsetzsteller (26) ist, und
- **dass** die Komponenten jedes der DC/DC-Wandler (25) auf einer separaten Platine (24) angeordnet sind.

2. Adapter (1) nach Anspruch 1, **dadurch gekennzeichnet, dass** der jeweilige DC/DC-Wandler den jeweiligen Schalter (16), eine Drossel (14), einen Kondensator (17) und eine Diode (15) umfasst.

3. Adapter (1) nach Anspruch 1 oder 2, **dadurch gekennzeichnet, dass** die Platinen (24) der DC/DC-Wandler (25) auf einer Hauptplatine (23) des Spannungswandlers (5) angeordnet sind.

4. Adapter (1) nach Anspruch 3, **dadurch gekennzeichnet, dass** die Platinen (24) der DC/DC-Wandler (25) orthogonal zu der Hauptplatine (23) ausgerichtet sind.

5. Adapter (1) nach einem der Ansprüche 1 bis 4, **dadurch gekennzeichnet, dass** der erste Stecker (3) ein sieben- oder dreizehnpoliger 12 V-Stecker (4) oder ein sieben- oder fünfzehnpoliger 24 V-Stecker ist und der Spannungswandler (5) sechs Kanäle (6) mit je einem DC/DC-Wandler (25) aufweist.

6. Adapter (1) nach einem der Ansprüche 1 bis 4, **dadurch gekennzeichnet, dass** der erste Stecker (3) ein dreizehnpoliger 12 V-Stecker (4) oder ein fünfzehnpoliger 24 V-Stecker ist und der Spannungswandler (5) acht Kanäle (6) mit je einem DC/DC-Wandler (25) aufweist.

7. Adapter (1) nach einem der vorhergehenden Ansprüche, **dadurch gekennzeichnet, dass** die zweite Anhängersteckdose (7) eine sieben- oder fünfzehnpolige 24 V-Anhängersteckdose (8) oder eine sieben- oder dreizehnpolige 12 V-Anhängersteckdose ist.

8. Adapter (1) nach einem der Ansprüche 1 bis 7, **dadurch gekennzeichnet, dass** mindestens einer der Hochsetzsteller (11) ein spannungsverdoppelnder Step-Up-Wandler (10) ist.

9. Adapter (1) nach einem der Ansprüche 1 bis 7, **dadurch gekennzeichnet, dass** mindestens einer der Tiefsetzsteller ein spannungshalbierender Step-Down-Wandler (28) ist.

10. Adapter (1) nach einem der vorhergehenden Ansprüche, **dadurch gekennzeichnet, dass** das Adaptergehäuse (2) mehrere starr miteinander verbundene und gegeneinander abgedichtete Kunststoffteile aufweist.

11. Adapter (1) nach Anspruch 6, **dadurch gekennzeichnet, dass** der Spannungswandler (5) in einer abgedichteten Kammer (9) im Inneren des Adaptergehäuses (2) angeordnet ist.

12. Adapter (1) nach einem der vorhergehenden Ansprüche, **dadurch gekennzeichnet, dass** an dem ersten Stecker (3) und/oder dem Adaptergehäuse (2) erste Sicherungsmittel zum mechanischen Festlegen des ersten Steckers (3) in der ersten Anhängersteckdose und/oder an der zweiten Anhängersteckdose (7) und/oder dem Adaptergehäuse (2) zweite Sicherungsmittel zum mechanischen Festlegen des zweiten Steckers in der zweiten Anhängersteckdose (7) ausgebildet sind.

13. Adapter (1) nach einem der vorhergehenden Ansprüche, **dadurch gekennzeichnet, dass** eine Gesamtlänge des Adapters (1) von einem ersten freien Ende des ersten Steckers (3) bis zu einem zweiten freien Ende der zweiten Anhängersteckdose (7) nicht mehr als 25 cm oder 20 cm oder 15 cm oder 10 cm beträgt.

14. Adapter (1) nach einem der vorhergehenden Ansprüche, **dadurch gekennzeichnet, dass** eine Gesamtmasse des Adapters (1) nicht mehr als 350 g oder 300 g oder 250 g oder 200 g beträgt.

15. Adapter (1) nach einem der vorhergehenden Ansprüche, **dadurch gekennzeichnet, dass** ein Maximaldurchmesser des Adapters (1) quer zu seiner von dem ersten Stecker (3) zu der zweiten Anhängersteckdose (7) verlaufenden Hauptachse nicht mehr als 12 cm oder 10 cm oder 8 cm beträgt.

## Claims

1. Adapter (1) comprising
- an adapter housing (2),
- a first plug (3) which is arranged at the adapter housing (2) in a spatially fixed way and which is configured for being plugged into a first trailer socket,
- a second trailer socket (7) which is arranged at the adapter housing (2) in a spatially fixed way and which is configured for plugging-in a second plug, and
- a voltage converter (5) which is arranged within the adapter housing (2) and which is connected between the first plug (3) and the second trailer socket (7),
- wherein the first plug (3) is a 12 V plug (4) and the second trailer socket (7) is a 24 V trailer socket (8), or the first plug (3) is a 24 V plug and the second trailer socket (7) is a 12 V trailer socket, and
- wherein the voltage converter (5) comprises a plurality of channels (6) each comprising a switch (16),
**characterized in**
- **that** the voltage converter (5) comprises a plurality of channels (6) each comprising a DC/DC converter including the respective switch, wherein the DC/DC converter (25) is a boost converter (11), if the first plug (3) is a 12 V plug (4) and the second trailer socket (7) is a 24 V trailer socket (8), and is a buck converter (26), if the first plug (3) is a 24 V plug and the second trailer socket (7) is a 12 V trailer socket, and
- **that** the components of each of the DC/DC converters (25) are arranged on a separate circuit board (25).

2. Adapter (1) of claim 1, **characterised in that** the respective DC/DC converter includes the respective switch (16), an inductor (14), a capacitor (17) and a diode (15).

3. Adapter (1) of claim 1 or 2, **characterised in that** the circuit boards (24) of the DC/DC converters (25) are arranged on a main board (23) of the voltage converter (5).

4. Adapter (1) of claim 3, **characterised in that** the circuit boards (24) of the DC/DC converters (25) are orientated orthogonally with respect to the main board (23).

5. Adapter (1) of any of the claims 1 to 4, **characterised in that** the first plug (3) is a 7-pole or 13-pole 12 V plug (4) or a 7-pole or 15-pole 24 V plug, and the voltage converter (5) comprises six channels (6), each comprising a DC/DC converter (25).

6. Adapter (1) of any of the claims 1 to 4, **characterised in that** the first plug (3) is a 13-pole 12 V plug (4) or a 15 pole 24 V plug and the voltage converter (5) comprises eight channels (6), each comprising a DC/DC converter (25).

7. Adapter (1) of any of the preceding claims, **characterised in that** the second trailer socket (7) is a 7-pole or 15-pole 24 V trailer socket (8) or a 7-pole or 13-pole 12 V trailer socket.

8. Adapter (1) of any of the claims 1 to 7, **characterised in that** at least one of the boost converters (11) is a voltage duplicating step up converter (10).

9. Adapter (1) of any of the claims 1 to 7, **characterised in that** the at least one buck converter is a voltage halving step down converter (28).

10. Adapter (1) of any of the preceding claims, **characterised in that** the adapter housing 2 comprises two rigidly connected and mutually sealed plastic parts.

11. Adapter (1) of claim 6, **characterised in that** the voltage converter (5) is arranged in a sealed chamber (9) in the interior of the adapter housing (2).

12. Adapter (1) of any of the preceding claims, **characterised in that** first securing means of mechanically fixing the first plug (3) in the first trailer socket are formed at the first plug (3) and/or the adapter housing (2) and/or second securing means for mechanically fixing the second plug in the second trailer circuit (7) are formed at the second trailer socket (7) and/or the adapter housing (2).

13. Adapter (1) of any of the preceding claims, **characterised in that** a total length of the adapter (1) from a first free end of the first plug (3) up to a second free end of the second trailer socket (7) is not more than 25 cm or 20 cm or 15 cm or 10 cm.

14. Adapter (1) of any of the preceding claims, **characterised in that** a total mass of the adapter (1) is not more than 350 g or 300 g or 250 g or 200 g.

15. Adapter (1) of any of the preceding claims, **characterised in that** a maximum diameter of the adapter (1) perpendicular to a main axis running from the first plug (3) to the second trailer socket (7) is not more than 12 cm or 10 cm or 8 cm.

## Revendications

1. Adaptateur (1) avec
- un boîtier d'adaptateur (2),
- un premier connecteur mâle (3) qui est disposé de manière fixe sur le boîtier d'adaptateur (2) et qui est conçu pour être enfiché dans un premier connecteur femelle de remorque,
- un deuxième connecteur femelle de remorque (7) qui est disposé de manière fixe sur le boîtier d'adaptateur (2) et qui est conçu pour l'enfichage d'un deuxième connecteur mâle et
- un convertisseur de tension (5) qui est disposé dans le boîtier d'adaptateur (2) et qui est branché entre le premier connecteur mâle (3) et le deuxième connecteur femelle de remorque (7),
- dans lequel le premier connecteur mâle (3) est un connecteur mâle 12V (4) et le deuxième connecteur femelle de remorque (7) est un connecteur femelle de remorque 24V (8) ou le premier connecteur mâle (3) est un connecteur mâle 24V et le deuxième connecteur femelle de remorque (7) est un connecteur femelle de remorque 12V et
- dans lequel le convertisseur de tension (5) comprend plusieurs canaux (6) avec chacun un interrupteur (16),
**caractérisé en ce que**
- le convertisseur de tension (5) comprend plusieurs canaux (6) avec chacun un convertisseur DC/DC comprenant l'interrupteur correspondant, dans lequel le convertisseur DC/DC (25) est un convertisseur élévateur (11) lorsque le premier connecteur mâle (3) est un connecteur mâle 12V (4) et le deuxième connecteur femelle de remorque (7) est un connecteur femelle de remorque 24V (8) et est un convertisseur abaisseur (26) lorsque le premier connecteur mâle (3) est un connecteur mâle 24V et le deuxième connecteur femelle de remorque (7) est un connecteur femelle de remorque 12V et
- les composants de chacun des convertisseurs DC/DC (25) sont disposés sur une platine (24) séparée.

2. Adaptateur (1) selon la revendication 1, **caractérisé en ce que** le convertisseur DC/DC correspondant comprend l'interrupteur (16), une inductance (14), un condensateur (17) et une diode (15).

3. Adaptateur (1) selon la revendication 1 ou 2, **caractérisé en ce que** les platines (24) des convertisseurs DC/DC (25) sont disposées sur une platine principale (23) du convertisseur de tension (5).

4. Adaptateur (1) selon la revendication 3, **caractérisé en ce que** les platines (24) des convertisseurs DC/DC (25) sont orientées perpendiculairement à la platine principale (23).

5. Adaptateur (1) selon l'une des revendications 1 à 4, **caractérisé en ce que** le premier connecteur mâle (3) est un connecteur mâle 12V à sept ou treize pôles (4) ou un connecteur mâle 24V à sept ou à quinze pôles et le convertisseur de tension (5) comprend six canaux (6) avec chacun un convertisseur DC/DC (25).

6. Adaptateur (1) selon l'une des revendications 1 à 4, **caractérisé en ce que** le premier connecteur mâle (3) est un connecteur mâle 12V à treize pôles (4) ou un connecteur mâle 24V à quinze pôles et le convertisseur de tension (5) comprend huit canaux (6) avec chacun un convertisseur DC/DC (25).

7. Adaptateur (1) selon l'une des revendications précédentes, **caractérisé en ce que** le deuxième connecteur femelle de remorque (7) est un connecteur femelle de remorque 24V à sept ou à quinze pôles (8) ou un connecteur femelle 12V à sept ou à treize pôles.

8. Adaptateur (1) selon l'une des revendications 1 à 7, **caractérisé en ce qu'**au moins un des convertisseurs élévateurs (11) est un convertisseur step-up (10) doublant la tension.

9. Adaptateur (1) selon l'une des revendications 1 à 7, **caractérisé en ce qu'**au moins un des convertisseurs abaisseurs est un convertisseur step-down (28) divisant la tension par deux.

10. Adaptateur (1) selon l'une des revendications précédentes, **caractérisé en ce que** le boîtier d'adaptateur (2) comprend plusieurs pièces en matière plastique reliées de manière rigide entre elles et étanchéifiées les unes par rapport aux autres.

11. Adaptateur (1) selon la revendication 6, **caractérisé en ce que** le convertisseur de tension (5) est disposé dans une chambre étanche (9) à l'intérieur du boîtier d'adaptateur (2).

12. Adaptateur (1) selon l'une des revendications précédentes, **caractérisé en ce que**, sur le premier connecteur mâle (3) et/ou sur le boîtier d'adaptateur (2), sont prévus des premiers moyens de fixation pour la fixation mécanique du premier connecteur mâle (3) dans le premier connecteur femelle de remorque et/ou sur le deuxième connecteur femelle de remorque (7) et/ou sur le boîtier d'adaptateur (2), sont prévus des deuxièmes moyens de fixation pour la fixation mécanique du deuxième connecteur mâle dans le deuxième connecteur femelle de remorque (7).

13. Adaptateur (1) selon l'une des revendications précédentes, **caractérisé en ce qu'**une longueur totale de l'adaptateur (1), d'une première extrémité libre du premier connecteur mâle (3) jusqu'à une deuxième extrémité libre du deuxième connecteur femelle de remorque (7), n'est pas supérieure à 25 cm ou 20 cm ou 15 cm ou 10 cm.

14. Adaptateur (1) selon l'une des revendications précédentes, **caractérisé en ce qu'**une masse totale de l'adaptateur (1) n'est pas supérieure à 350 g ou 300 g ou 250 g ou 200 g.

15. Adaptateur (1) selon l'une des revendications précédentes, **caractérisé en ce qu'**un diamètre maximal de l'adaptateur (1) transversalement par rapport à son axe principal s'étendant du premier connecteur mâle (3) au deuxième connecteur femelle de remorque (7), n'est pas supérieur à 12 cm ou 10 cm ou 8 cm.
